# EUROPEAN PATENT APPLICATION

(11) **EP 4 663 588 A1**
(43) Date of publication of application: **17.12.2025**
(21) Application number: 24863106.1
(22) Date of filing: 27.08.2024
(51) Int. Cl.: B65H 5/22, H01M 10/04

(54) **CONVEYING DEVICE**

(30) Priority: 08.09.2023 KR 20230119927
(71) Applicant: LG Energy Solution, Ltd., Seoul 07335 (KR)
(72) Inventor: KIM, In-Kwon, Daejeon 34122 (KR); LEE, Jun-Oh, Daejeon 34122 (KR); LEE, Gil-Young, Daejeon 34122 (KR)
(74) Representative: Goddar, Heinz J.
(86) International application number: PCT/KR2024/012793
(87) International publication number: WO 2025/053525

(57) **Abstract**

A transfer device according to an embodiment of the present disclosure includes a first disk having a disk shape and configured to be rotatable based on the central axis of the disk, a second disk provided above the first disk and having a disk shape, and a gasket interposed between the first disk and the second disk.

## Description

### TECHNICAL FIELD

The present disclosure relates to a device for transferring objects, particularly battery cells or components constituting battery cells.

This application is based on and claims priority from Korean Patent Application No. 10-2023-0119927, filed on September 8, 2023, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to form a battery pack. Additionally, depending on the charging and discharging capacity required for the battery pack, a plurality of battery cells may be connected in parallel to form a battery pack. Thus, the number of battery cells included in the battery pack may be variously set according to the required output voltage and/or the demanded charging and discharging capacity.

Meanwhile, in the process of manufacturing such secondary batteries, rotary equipment is used in various processes. For example, this may include a transfer device for transferring battery cells or components constituting battery cells from one process to the next process. In this rotary equipment structure, the corresponding operation is performed by sending and receiving signals to and from solenoid valves in accordance with vacuum and release in the disk section where components or the like are handed over and taken over.

However, due to the characteristics of the rotary equipment that is driven at high speed, there was a problem of being difficult to match the timing of vacuum adsorption and release when components or the like were taken over and handed over. Specifically, a problem such as non-operation due to vacuum and release delay occurred. Additionally, as electrical wiring was required according to the quantity of components to be transferred, there were problems such as an increase in management points for electrical components and an increase in equipment costs.

### DISCLOSURE

### Technical Problem

The present disclosure is designed to solve the problems of the related art, and therefore the present disclosure is directed to increasing the consistency of the timing of vacuum and vacuum release during transfer of battery cells or components constituting battery cells.

In another aspect, the present disclosure is also directed to reducing the number of components constituting the transfer device, thereby reducing the device management points and reducing costs.

However, technical problems to be solved by the present disclosure are not limited to the above-described problems, and other problems not mentioned herein may be clearly understood by those having ordinary skill in the art from the following description of the present disclosure.

### Technical Solution

A transfer device according to an embodiment of the present disclosure for solving the above-described problem includes a first disk having a disk shape and configured to be rotatable based on the central axis of the disk; a second disk provided above the first disk and having a disk shape; and a gasket interposed between the first disk and the second disk.

Preferably, the second disk and the gasket may not rotate.

In one aspect of the present disclosure, the first disk may have a plurality of adsorption holes along the circumferential direction.

Preferably, the adsorption holes may be configured to adsorb and desorb the object to be transferred.

In another aspect of the present disclosure, the gasket may include at least one each of a first slot and a second slot configured to penetrate in a direction parallel to the central axis and have a predetermined space.

Here, the first slot may be a vacuum slot.

Here, the second slot may be an air blow slot.

In still another aspect of the present disclosure, the first slot and the second slot may have an arc shape formed to have a predetermined angle based on the central axis.

In still another aspect of the present disclosure, the gasket may have a ring shape.

In one aspect of the present disclosure, the second disk may include a first fitting connected to a vacuum device; and a second fitting connected to an air blow device.

Here, the first fitting may be connected to the first slot, and the second fitting may be connected to the second slot.

Preferably, at least one of the first fitting and the second fitting may be provided in plurality.

In another aspect of the present disclosure, a first valve configured to control the inflow and outflow of gas may be provided between the first fitting and the vacuum device.

In still another aspect of the present disclosure, a second valve configured to control the inflow and outflow of gas may be provided between the second fitting and the air blow device.

Preferably, the first valve and the second valve may be solenoid valves.

### Advantageous Effects

According to the present disclosure, the consistency of the timing of vacuum and vacuum release during transfer of battery cells or components constituting battery cells may be increased.

In another aspect, according to the present disclosure, the number of components constituting the transfer device may be reduced.

Accordingly, the device management points may be reduced and costs may be reduced, thereby securing economic feasibility.

However, the effects to be obtained by the present disclosure are not limited to the above-described effects, and other technical effects not mentioned herein may be clearly understood by those having ordinary skill in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a transfer device according to an embodiment of the present disclosure.
FIG. 2 is an exploded perspective view of FIG. 1.
FIG. 3 is a view for describing a first disk included in the transfer device of FIG. 1.
FIG. 4 is a side view of the first disk of FIG. 3.
FIG. 5 is a view for describing a gasket included in the transfer device of FIG. 1.
FIG. 6 is a view for describing a second disk included in the transfer device of FIG. 1.
FIG. 7 is a longitudinal cross-sectional view of the transfer device of FIG. 1 cut at a predetermined angle.
FIG. 8 is a longitudinal cross-sectional view of the transfer device of FIG. 1 cut at a different angle from FIG. 7.
FIG. 9 is a view for describing a vacuum section of the transfer device of FIG. 1 and a point where the vacuum ends.
FIG. 10 is a view for describing the process of handing over a tape to a tape attachment disk by the transfer device of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, to help understanding of the present disclosure, the accompanying drawings are not drawn to actual scale, but dimensions of some components may be exaggerated.

Conventionally, in the process of manufacturing secondary batteries, rotary equipment is used in various processes. For example, this may include a transfer device for transferring battery cells or components constituting battery cells from one process to the next process. In this rotary equipment structure, the corresponding operation is performed by sending and receiving signals to and from solenoid valves in accordance with vacuum and release in the disk section where components or the like are handed over and taken over.

However, due to the characteristics of the rotary equipment that is driven at high speed, there was a problem of being difficult to match the timing of vacuum adsorption and release when components or the like were taken over and handed over. Specifically, a problem such as non-operation due to vacuum and release delay occurred. Additionally, as electrical wiring was required according to the quantity of components to be transferred, there were problems such as an increase in management points for electrical components and an increase in equipment costs.

More specifically, in the conventional rotary equipment, the transfer device forms a vacuum chamber for each disk head and installs a solenoid valve in each vacuum chamber to implement vacuum and vacuum release. For example, when the number of heads of the disk is six, six vacuum chambers should be formed and six solenoid valves should be included. This method of controlling the vacuum by providing a valve for each head not only has a cost problem, but also causes a problem of increase in the device management points due to an excessive number of components constituting the transfer device, such as solenoid valves, electrical wiring, and the like.

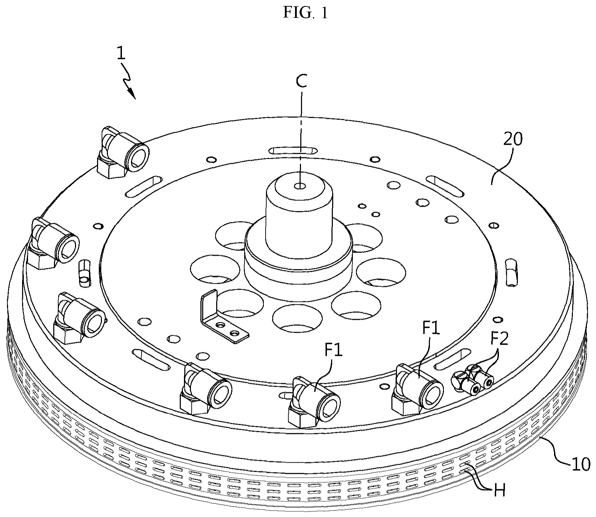

The present disclosure is intended to solve the above problems, and a transfer device 1 for achieving the above purpose will be described in detail below with reference to FIGS. 1 to 10.

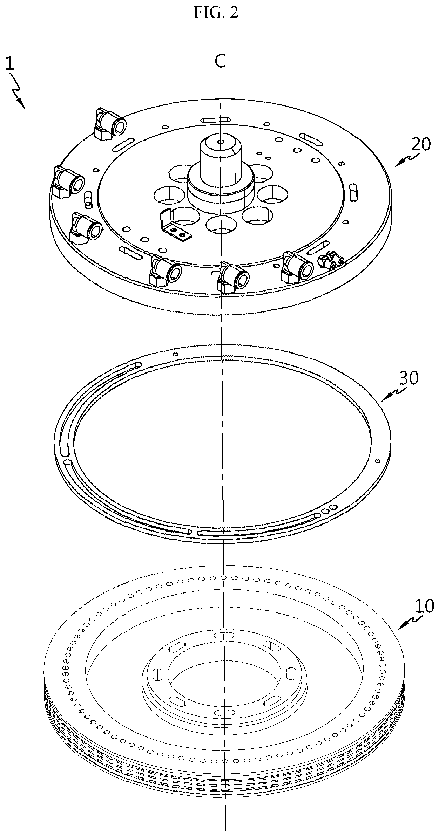

FIG. 1 is a view for describing a transfer device 1 according to an embodiment of the present disclosure, and FIG. 2 is an exploded perspective view of FIG. 1.

Referring to FIGS. 1 and 2, a transfer device 1 according to an embodiment of the present disclosure includes a first disk 10, a second disk 20, and a gasket 30.

More specifically, the transfer device 1 may include a first disk 10 having a disk shape and configured to be rotatable based on the central axis C of the disk; a second disk 20 provided above the first disk 10 and having a disk shape; and a gasket 30 interposed between the first disk 10 and the second disk 20.

The gasket 30 may secure airtightness between the first disk 10 and the second disk 20. The gasket 30 may be configured to generate a vacuum, vacuum release, or air blow at a predetermined location. The object to be transferred may be configured to be adsorbed and desorbed on the first disk 10.

According to this structure, it is possible to reduce the number of valves applied to each location where vacuum and vacuum release are required in the prior art. Accordingly, equipment costs may be reduced. Additionally, the consistency of the timing of takeover and handover, which was matched by the electric signal of the valve, may be improved. That is, according to the present disclosure, the consistency of the timing of takeover and handover may be improved through the improvement of the mechanical structure, and the number of valves required for the adsorption and desorption of the object to be transferred may be reduced, thereby reducing unnecessary wiring work and complexity.

Preferably, the second disk 20 and the gasket 30 may not rotate. That is, it may be configured such that only the first disk 10 rotates and the second disk 20 and the gasket 30 do not rotate.

According to this structure, only the first disk 10 that transfers the object to be transferred may rotate, thereby transferring the object, and the second disk 20 and the gasket 30, which are not in direct contact with the object to be transferred, may remain fixed, thereby increasing the efficiency of the device and minimizing unnecessary operation and movement.

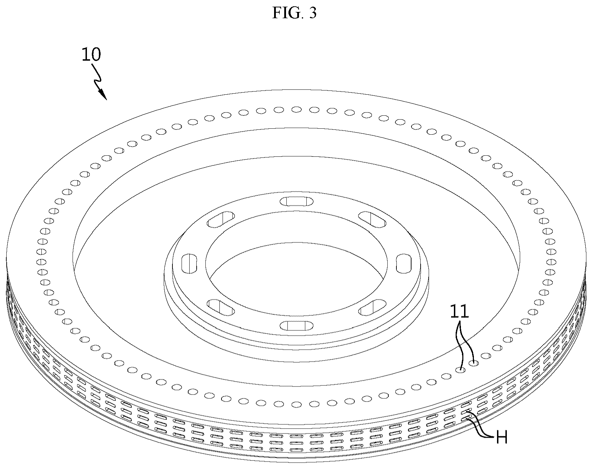

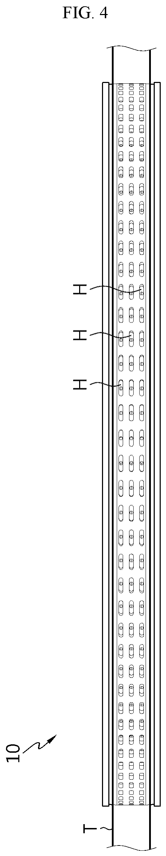

FIG. 3 is a view for describing a first disk 10 included in the transfer device 1 of FIG. 1, and FIG. 4 is a side view of the first disk 10 of FIG. 3.

In one aspect of the present disclosure, the first disk 10 may have a plurality of adsorption holes H along the circumferential direction.

For example, referring to FIGS. 3 and 4, the first disk 10 may have an approximately disk shape. In this case, the first disk 10 may have a plurality of through lines 11 penetrating in a direction parallel to the central axis C. That is, the through lines 11 may be configured to have tubular spaces penetrating the upper and lower surfaces of the first disk 10. The through lines 11 may be provided to be plurally arranged along the circumferential direction based on the central axis C.

Meanwhile, referring to FIGS. 3 and 4, the first disk 10 may have a plurality of adsorption holes H along the circumferential direction. The adsorption holes H may be provided on the side surface of the first disk 10. The adsorption holes H may be provided in plurality on the side surface of the first disk 10. The adsorption holes H may be configured to be connected to the through line 11. That is, the adsorption holes H may be configured as a tubular passage from the outer surface of the first disk 10 to the through line 11. Therefore, the adsorption holes H and the through line 11 may communicate with each other.

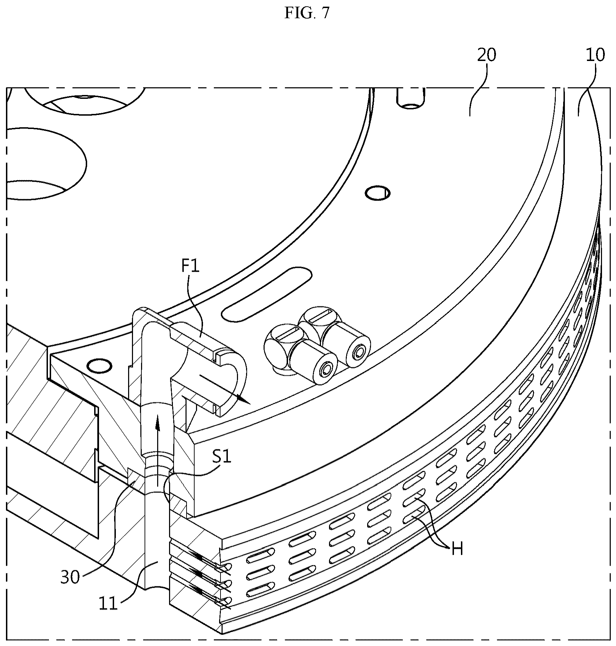

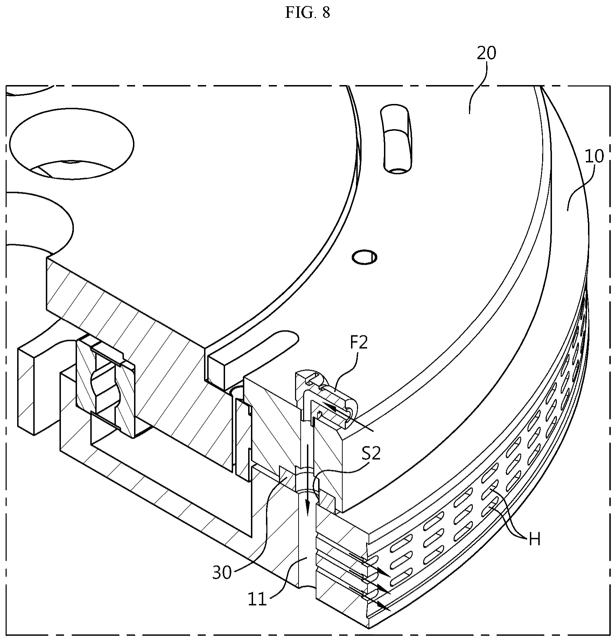

In another aspect of the present disclosure, the adsorption holes H physically connected to one through line 11 may be in plurality. For example, referring to FIG. 3, there may be three adsorption holes H connected to one through line 11. This will be described in more detail later with reference to FIGS. 7 and 8.

In still another aspect of the present disclosure, the adsorption hole H may be configured to adsorb and desorb the object to be transferred. That is, according to the present disclosure, by controlling the inflow and outflow of gas through the through line 11 and the adsorption hole H, the adsorption and desorption of the object to be transferred in contact with the adsorption hole H may be controlled.

For example, referring to FIG. 4, the object to be transferred may be a tape T. The tape T may be a tape T surrounding the outer surface of a battery cell. In particular, the tape T may be a tape T surrounding the side of a cylindrical battery cell. That is, the side surface of the cylindrical battery cell is made of a conductor and generally has a negative electrode or a positive electrode, and by covering the side surface of the battery cell with the tape T, the conductivity of the side surface of the battery cell may be blocked. Before performing the process of surrounding the outer surface of the battery cell with the tape T in this way, a transfer for guiding the tape T to the process may be required. The present disclosure may be a transfer device 1 for handing over such a tape T. Referring to FIG. 4, a plurality of adsorption holes H are provided on the side surface of the first disk 10, and the tape T may be attached and/or detached at a position facing the plurality of adsorption holes H. That is, the tape T may be attached to the side surface of the first disk 10 at a predetermined point, and the tape T may be detached from the side surface of the first disk 10 at a predetermined point. According to the present disclosure, such an attachment point and a detachment point may be fixed to a specific position, and in the process, the control accuracy of the attachment point and the detachment point may be improved.

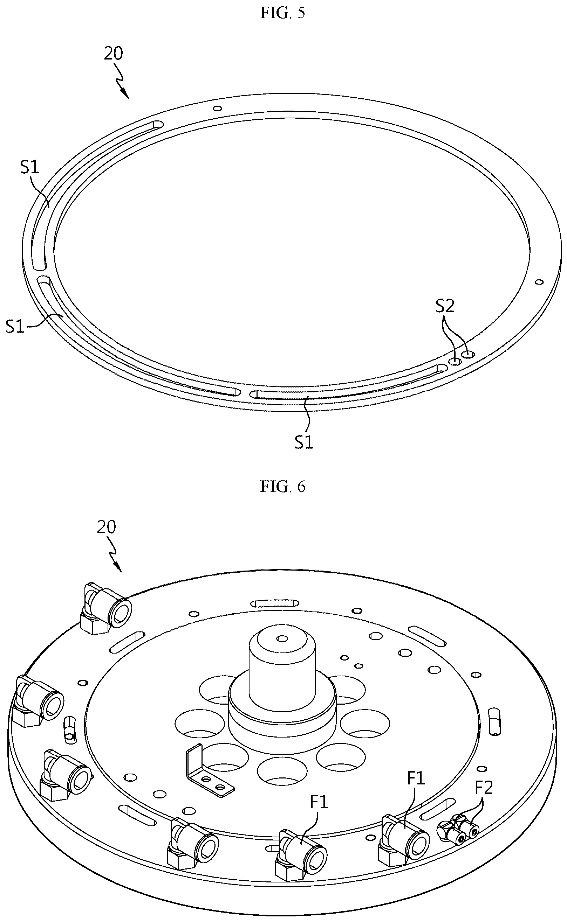

FIG. 5 is a view for describing a gasket 30 included in the transfer device 1 of FIG. 1.

In another aspect of the present disclosure, the gasket 30 may include a first slot S1 and a second slot S2. More specifically, it may include at least one each of the first slot S1 and the second slot S2 configured to penetrate in a direction parallel to the central axis C and have a predetermined space.

For example, referring to FIG. 5, the gasket 30 may include a plurality of first slots S1 and a plurality of second slots S2 that penetrate in a direction parallel to the central axis C. Here, the first slot S1 may be a vacuum slot, and the second slot S2 may be an air blow slot. For example, a vacuum may be generated at a position corresponding to the first slot S1, and gas may be discharged at a position corresponding to the second slot S2. Here, the first slot S1 and the second slot S2 may be configured to communicate with the through line 11 of the first disk 10. That is, the gasket 30 may be positioned above the first disk 10, and the first slot S1 or the second slot S2 may be positioned above the plurality of through lines 11 provided on the first disk 10. Accordingly, the first slot S1, the through line 11, and the adsorption hole H may be configured to allow gas communication with each other. Likewise, the second slot S2, the through line 11, and the adsorption hole H may also be configured to allow gas communication with each other.

According to this structure, a vacuum is generated in the adsorption hole H at a position corresponding to the first slot S1, so that the tape T in contact with the adsorption hole H at a position corresponding to the first slot S1 may be effectively adsorbed. Additionally, an air blow is generated in the adsorption hole H at a position corresponding to the second slot S2, so that the tape T in contact with the adsorption hole H at a position corresponding to the second slot S2 may be effectively desorbed. That is, according to the present disclosure, it is possible to control vacuum and vacuum release at a specific area and/or point.

In still another aspect of the present disclosure, the first slot S1 and the second slot S2 may have an arc shape formed to have a predetermined angle based on the central axis C.

For example, referring to FIG. 5, the first slot S1 may have an arc shape having a predetermined angle based on the central axis C. In this case, when the predetermined angle becomes extremely small, the arc shape may become a circular shape. For example, referring to FIG. 5, the second slot S2 may have such a circular shape.

According to this structure, the shapes of the first slot S1 and the second slot S2 may be variously configured. Accordingly, the timing of vacuum and air blow may be configured in various ways in some cases. For example, if the length of the tape T to be attached is changed, the position and angle of the first slot S1 and the second slot S2 may be changed to match the changed length, thereby enabling attachment and detachment of the changed tape T.

In still another aspect of the present disclosure, the gasket 30 may have, for example, a ring shape. However, the shape of the gasket 30 is not limited thereto, and any shape that can be interposed between the first disk 10 and the second disk 20 will be said to be included in the scope of the present disclosure. For example, the gasket 30 may have a disk shape.

FIG. 6 is a view for describing a second disk 20 included in the transfer device 1 of FIG. 1.

In still another aspect of the present disclosure, the second disk 20 may include a first fitting F1 and a second fitting F2. More specifically, the second disk 20 may include a first fitting F1 connected to a vacuum device; and a second fitting F2 connected to an air blower device.

According to this structure, the first fitting F1 and the second fitting F2 may serve as a passage for the inflow and outflow of gas. That is, the first fitting F1 may be connected to a vacuum device, and at this time, a pipe or the like for connection may be further included. Therefore, when the vacuum device is operated, gas may move toward the outside of the first fitting F1 through the first fitting F1. Likewise, the second fitting F2 may be connected to an air blower device, and at this time, a pipe or the like for connection may be further included. Therefore, when the air blower device is operated, gas may move from the outside of the second fitting F2 to the inside through the second fitting F2.

FIG. 7 is a longitudinal cross-sectional view of the transfer device 1 of FIG. 1 cut at a predetermined angle, and FIG. 8 is a longitudinal cross-sectional view of the transfer device 1 of FIG. 1 cut at a different angle from FIG. 7.

Referring to FIG. 7, the first fitting F1 may be connected to the first slot S1. That is, as can be seen in FIG. 7, the first fitting F1, the first slot S1, the through line 11, and the adsorption hole H may be configured to allow gas communication with each other. Accordingly, when the vacuum device connected to the first fitting F1 is operated, a vacuum is generated in the adsorption hole H at the position communicating with the first fitting F1, so that the tape T facing the corresponding position may be effectively adsorbed.

Referring to FIG. 8, the second fitting F2 may be connected to the second slot S2. That is, as can be seen in FIG. 8, the second fitting F2, the second slot S2, the through line 11, and the adsorption hole H may be configured to allow gas communication with each other. Accordingly, when the air blow device connected to the second fitting F2 is operated, gas is discharged in the adsorption hole H at the position communicating with the second fitting F2, so that the tape T facing the corresponding position may be effectively desorbed. If only a simple vacuum release is performed rather than an air blow, the handover performance of the tape T may be degraded. Therefore, in the present disclosure, an air blow that discharges gas beyond a simple vacuum release may be applied to ensure a reliable expulsion of the tape T at a predetermined position.

In still another aspect of the present disclosure, at least one of the first fitting F1 and the second fitting F2 may be provided in plurality.

For example, referring to FIGS. 5 and 6, two first fittings F1 may be connected per one first slot S1. However, the scope of the present disclosure is not limited to two fittings per slot, and it is obvious that embodiments in which three or more fittings are connected per one slot are also included in the scope of the present disclosure.

According to this structure, a uniform vacuum and/or air blow effect may be achieved due to the structure in which a plurality of fittings are connected to one slot. For example, when only one fitting is configured to be connected to a slot having an arc shape elongated in the circumferential direction, such as the first slot S1, the vacuum and/or air blow in the adsorption hole H located near the point where the fitting is connected may be strong, and the vacuum and/or air blow in the adsorption hole H located in the remaining area may be relatively weak. However, according to the embodiment of the present disclosure as described above, a uniform air flow may occur in all adsorption holes H within one slot.

According to still another aspect of the present disclosure, a first valve configured to control the inflow and outflow of gas may be provided between the first fitting F1 and the vacuum device. A second valve configured to control the inflow and outflow of gas may be provided between the second fitting F2 and the air blow device.

Although not shown in the drawings, the first fitting F1 may be connected to the vacuum device through a predetermined hose or pipe. In this case, a first valve may be provided on the hose or pipe. For example, referring to FIG. 5, the present disclosure may include three first slots S1, that is, three vacuum slots. Here, referring further to FIG. 6, two first fittings F1 may be connected to each first slot S1. Therefore, in this embodiment, a total of six first fittings F1 may be provided. Each first fitting F1 may be connected to the vacuum device through a pipe, and the first valve may be provided on the integrated pipe line where each pipe is combined.

That is, according to the present disclosure, only one first valve may be configured to be provided on the integrated pipe line where each pipe is combined. Therefore, according to the present disclosure, the vacuum of the entire device may be controlled through a single valve control. Accordingly, the management points of the electrical equipment may be significantly reduced.

Alternatively, the first valve may be provided on each pipe, not on the integrated pipe line. If the vacuum timing is to be configured differently for each location of the first slot S1, the first valve may be provided on each pipe. Alternatively, a valve may also be provided for each slot.

Likewise, the second fitting F2 may be connected to the air blow device through a predetermined hose or pipe. In this case, a second valve may be provided on the hose or pipe. For example, referring to FIG. 5, the present disclosure may include two second slots S2, that is, two air blow slots. Here, referring further to FIG. 6, one second fitting F2 may be connected to each second slot S2. Therefore, in this embodiment, a total of two second fittings F2 may be provided. Each second fitting F2 may be connected to the air blow device through a pipe, and the second valve may be provided on the integrated pipe line where each pipe is combined.

That is, according to the present disclosure, only one second valve may be configured to be provided on the integrated pipe line where each pipe is combined. Therefore, according to the present disclosure, the air blow of the entire device may be controlled through a single valve control. Accordingly, the management points of the electrical equipment may be significantly reduced.

Alternatively, the second valve may be provided on each pipe, not on the integrated pipe line. If the air blow timing is to be configured differently for each location of the second slot S2, the second valve may be provided on each pipe. Alternatively, a valve may also be provided for each slot.

In the conventional rotary equipment, a vacuum chamber is formed for each head location of the object to be transferred, and a valve is individually installed for each vacuum chamber, so that numerous valves are required, and the opening and closing timing for each valve should be individually adjusted. However, according to the above structure of the present disclosure, the number of required valves may be significantly reduced. Accordingly, equipment costs may be effectively reduced, and the management points of electrical equipment may be significantly reduced.

Meanwhile, in still another aspect of the present disclosure, the first valve and the second valve may be solenoid valves. By configuring the valves as solenoid valves in this way, the inflow and outflow of gas may be effectively controlled through electrical signals.

However, the types of the first valve and the second valve of the present disclosure are not limited to solenoid valves, and it is obvious that any valve capable of controlling the inflow and outflow of gas may be applied to the first valve and/or the second valve of the present disclosure.

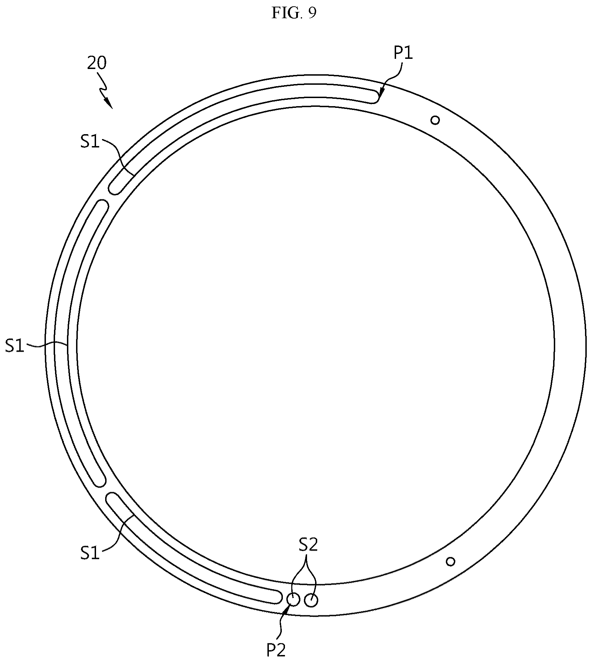

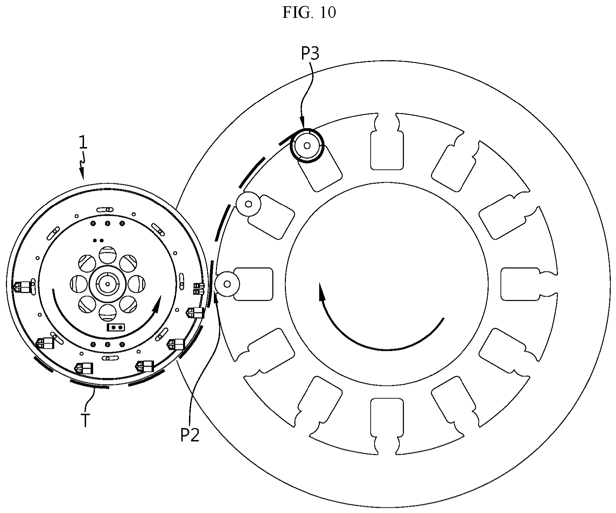

FIG. 9 is a view for describing a vacuum section of the transfer device 1 of FIG. 1 and a point where the vacuum ends, and FIG. 10 is a view for describing the process of handing over a tape T to a tape T attachment disk by the transfer device 1 of FIG. 1.

FIG. 9 shows a plan view of the gasket 30, and the gasket 30 does not rotate as described above and remains fixed. In this case, the first disk 10 located at the lower portion of the gasket 30 may rotate. For example, the first disk 10 may rotate counterclockwise. That is, the first disk 10 may rotate counterclockwise at the lower portion of the gasket 30. The first disk 10 may be configured to transfer the tape T from the first point P1 to the second point P2. That is, the first disk 10 may take over the tape T from another rotary at the first point P1. The first point P1 is a position where the first slot S1 starts, and a vacuum may be generated from the first point P1 and maintained until the point where the first slot S1 ends. Therefore, the vacuum may be maintained up to the second point P2. Meanwhile, the second point P2 is a position where the second slot S2 starts, and air blow occurs at the second point P2. That is, the tape T attached to the first disk 10 at the first point P1 may be transferred counterclockwise and then handed over to the next rotary equipment at the second point P2.

Referring to FIG. 10, the transfer device 1 may take over the tape T from a predetermined position, transfer the tape T counterclockwise, and hand over the tape T to the right rotary at the second point P2. That is, the transfer device 1 may hand over the tape T to the next rotary equipment at a point in contact with the next rotary equipment. Here, the next rotary equipment may be, for example, a rotary equipment that performs the process of surrounding the tape T on the outer surface of a battery cell. In this case, the attachment of the tape T to the outer surface of the battery cell may be completed, for example, at the third point P3.

According to the various embodiments described above, in the present disclosure, the consistency of the timing of vacuum and vacuum release during the transfer of the battery cell or the components constituting the battery cell may be increased. Additionally, the number of components constituting the transfer device 1 may be reduced, and accordingly, the device management points may be reduced and costs may be reduced, thereby securing economic feasibility.

Meanwhile, the terms indicating directions as used herein such as upper and lower are used for convenience of description only, and it is obvious to those having ordinary skill in the art that the term may change depending on the position of the stated element or an observer.

The present disclosure has been hereinabove described with regard to a limited number of embodiments and drawings, but the present disclosure is not limited thereto and various modifications and variations will be possible by those having ordinary skill in the technical field pertaining to the present disclosure within the technical aspect of the present disclosure and the scope of the appended claims and their equivalents.

## Claims

1. A transfer device comprising:
a first disk having a disk shape and configured to be rotatable based on the central axis of the disk;
a second disk provided above the first disk and having a disk shape; and
a gasket interposed between the first disk and the second disk.

2. The transfer device according to claim 1,
wherein the second disk and the gasket do not rotate.

3. The transfer device according to claim 1,
wherein the first disk has a plurality of adsorption holes along the circumferential direction.

4. The transfer device according to claim 3,
wherein the adsorption holes are configured to adsorb and desorb the object to be transferred.

5. The transfer device according to claim 1,
wherein the gasket comprises at least one each of a first slot and a second slot configured to penetrate in a direction parallel to the central axis and have a predetermined space.

6. The transfer device according to claim 5,
wherein the first slot is a vacuum slot, and
the second slot is an air blow slot.

7. The transfer device according to claim 5,
wherein the first slot and the second slot have an arc shape formed to have a predetermined angle based on the central axis.

8. The transfer device according to claim 1,
wherein the gasket has a ring shape.

9. The transfer device according to claim 5,
wherein the second disk comprises:
a first fitting connected to a vacuum device; and
a second fitting connected to an air blow device.

10. The transfer device according to claim 9,
wherein the first fitting is connected to the first slot, and
the second fitting is connected to the second slot.

11. The transfer device according to claim 9,
wherein at least one of the first fitting and the second fitting is provided in plurality.

12. The transfer device according to claim 9,
wherein a first valve configured to control the inflow and outflow of gas is provided between the first fitting and the vacuum device.

13. The transfer device according to claim 12,
wherein a second valve configured to control the inflow and outflow of gas is provided between the second fitting and the air blow device.

14. The transfer device according to claim 13,
wherein the first valve and the second valve are solenoid valves.
